# EUROPÄISCHE PATENTSCHRIFT

(11) **EP 3 335 867 B1**
(45) Veröffentlichungstag und Bekanntmachung des Hinweises auf die Patenterteilung: **03.08.2022**
(21) Anmeldenummer: 17195721.0
(22) Anmeldetag: 10.10.2017
(51) Int. Cl.: B30B 1/00, B30B 15/00, B30B 11/00, B30B 11/08

(54) **VERFAHREN UND SYSTEM ZUM ZUFÜHREN EINES SCHMIER- ODER TRENNMITTELS ZU PRESSWERKZEUGEN EINER TABLETTENPRESSE**
METHOD AND SYSTEM FOR SUPPLYING A LUBRICANT OR RELEASE AGENT TO MOULDING TOOLS OF A TABLET PRESS
PROCÉDÉ ET SYSTÈME D'ALIMENTATION EN AGENT DE GRAISSAGE OU EN AGENT DE DÉMOULAGE POUR OUTILS DE PRESSAGE D'UNE PRESSE À COMPRIMER

(30) Priorität: 01.12.2016 DE 102016123279
(43) Veröffentlichungstag der Anmeldung: 20.06.2018
(73) Patentinhaber: Fette Compacting GmbH, 21493 Schwarzenbek (DE)
(72) Erfinder: Heinrich, Thomas, 21435 Stelle (DE); Meisolle, Stefan, 19243 Wittenburg (DE); Schöler, Martin, 20146 Hamburg (DE)
(74) Vertreter: Hauck Patentanwaltspartnerschaft mbB

(56) Entgegenhaltungen:
- EP-A2- 1 803 508
- WO-A1-98/04357
- JP-A- 2000 197 997
- JP-A- 2006 187 775
- JP-A- 2007 098 449
- US-A- 3 029 752
- US-A1- 2004 096 495

## Beschreibung

Die Erfindung betrifft ein Verfahren zum Zuführen eines Schmier- oder Trennmittels aus einer Dosierstation zu in einem Pressraum einer Tablettenpresse angeordneten Presswerkzeugen über eine die Dosierstation mit dem Pressraum verbindende Zuführleitung, wobei zumindest der Pressraum der Tablettenpresse gegenüber der Umgebung unter einem Unterdruck steht.

Die Erfindung betrifft außerdem ein System zum Zuführen eines Schmier- oder Trennmittels aus einer Dosierstation zu in einem Pressraum einer Tablettenpresse angeordneten Presswerkzeugen über eine die Dosierstation mit dem Pressraum verbindende Zuführleitung, wobei zumindest der Pressraum der Tablettenpresse gegenüber der Umgebung unter einem Unterdruck steht.

Die Bestäubung der Presswerkzeuge, wie Presstempel oder Matrizenbohrungen, von Tablettenpressen beispielsweise mit Magnesiumstearat (MgSt) oder ähnlichen Stoffen ist grundsätzlich bekannt aus EP 0 676 280 B1. Ziel dieser Bestäubung, die auch als Schmierung bezeichnet wird, ist die Verbesserung des Tablettenausstoßes und die Vermeidung von Tablettierfehlern insbesondere bei zu verpressenden Produkten mit starker Klebeneigung. Üblicherweise erfolgt die Zuführung des Schmier- oder Trennmittels durch eine kontinuierliche Dosierung in Kombination mit einer pneumatischen Überdruckförderung, die das beispielsweise Luft als Trägermedium zugeführte Schmier- oder Trennmittel zur Wirkstelle transportiert. Aus EP 0 336 197 A2 sind getaktete Dosierungen bekannt. Das Dosieren flüssiger oder suspendierter Schmierstoffe ist außerdem bekannt aus DE 39 022 93 A1 oder EP 1 179 414 A1. Darüber hinaus werden in DE 196 47 089 A1 Stearatdosierungen mit prozessabhängiger Steuerung der Dosiermenge und mit zusätzlicher Druckgaseinwirkung direkt vor dem Austritt des Schmierstoffs beschrieben. In allen vorgenannten Fällen erfolgt die Anbindung an die Tablettenpresse über eine offene Schlauchleitung.

Eine Sonderform von Tablettenpressen stellen Anlagen dar, die neben der Produktionsfunktion eine aktive Schutzfunktion im Sinne des Zurückhaltens toxischer Stäube von der Umgebung erfüllen. Solche Tablettenpressen werden auch als Containment-Pressen bezeichnet. Um die bei solchen Containment-Pressen geforderten geringen Expositionen zu erreichen, wird zumindest der Pressraum der Tablettenpresse dicht abgeschlossen und zusätzlich unter einen überwachten Unterdruck gegenüber der Umgebung versetzt. Bei diesen Randbedingungen ist eine Kombination mit der Zuführung eines Schmier- oder Trennmittels nach dem Stand der Technik bislang nicht möglich gewesen, da eine Öffnung der Barriere für die Zuführung des Schmier- oder Trennmittels unter den Bedingungen der Containment-Presse nicht ausreichend sicher erfolgen konnte.

Aus US 3,029,752 A ist eine Tablettenpresse bekannt, bei der den Unterstempeln ein Luft-Öl-Gemisch zugeführt wird, um ein Ansammeln von feinem Pulver zwischen den Unterstempeln und ihren jeweiligen Aufnahmen und damit eine Beschädigung der Unterstempel zu verhindern. Aus JP 2007-098449 A ist es bekannt, bei einer Pulverpresse eine verbleibende Menge eines pulverförmigen Schmiermittels genau zu bestimmen und die richtige Menge an pulverförmigem Schmiermittel zutreffend zu verwalten. Beide Dokumente US-3029752 A und JP-2007098449 A offenbaren ein Verfahren gemäß dem Oberbegriff des Anspruchs 1 und ein System gemäß dem Oberbegriff des Anspruchs 7.

Aus EP 1 803 508 A2 ist eine Vorrichtung zur Erzeugung eines Unterdrucks im abgedichteten Raum einer Tablettenpresse bekannt. Um im Falle einer Störung eines Unterdruckgebläses einen unzulässig schnellen Abbau des Unterdrucks zu verhindern, ist ein mit Druckluft betriebener Ejektor an den abgedichteten Raum angeschlossen, mit dem ein Unterdruck in dem abgedichteten Raum aufrechterhalten werden kann. Ausgehend von dem erläuterten Stand der Technik liegt der Erfindung daher die Aufgabe zugrunde, ein Verfahren und ein System der eingangs genannten Art bereitzustellen, mit denen auch bei Containment-Tablettenpressen eine Zuführung eines Schmier- oder Trennmittels mit verfahrenstechnisch und konstruktiv vertretbarem Aufwand sicher möglich ist..../2a

Die Erfindung löst die Aufgabe durch die Gegenstände der unabhängigen Ansprüche 1 und 7. Vorteilhafte Ausgestaltungen finden sich in den abhängigen Ansprüchen, der Beschreibung und den Figuren.

Wie eingangs erläutert, stellt das Zuführen eines Schmier- oder Trennmittels zu Presswerkzeugen, wie Pressstempeln oder Matrizenbohrungen, für Anwender von Tablettenpressen eine interessante Lösung für verschiedene Anwendungen dar. Wie ebenfalls eingangs erläutert, war die Anwendung dieser Technologie in Containment-Pressen bislang nicht möglich, da eine kontinuierliche Zuführung des Schmier- oder Trennmittels ein Risiko für die notwendige Schutzwirkung der Bearbeiter darstellte. Abhängig von dem Betriebszustand der Schmier- oder Trennmitteldosierung würde eine zusätzliche Öffnung geschaffen, durch die toxisches Produkt austreten könnte. Der Einsatz üblicher Ventiltechnik würde andererseits den Prozess behindern, wenn nicht zu jedem Zeitpunkt eine Zuführung des Schmier- oder Trennmittels sichergestellt ist, oder den Bedienerschutz gefährden, wenn keine sicherheitsgerichtete Abschaltung sichergestellt werden kann. Die Erfindung überwindet diese Probleme, wie nachfolgend näher erläutert werden wird.

Bei der Erfindung steht zumindest der Pressraum der Tablettenpresse gegenüber der Umgebung unter einem Unterdruck. Es handelt sich insbesondere um eine Containment-Presse oder eine High Containment-Presse. Wie eingangs erläutert, ist bei solchen Tablettenpressen eine aktive Schutzfunktion zur Zurückhaltung von in der Presse verarbeiteten toxischen Stäuben in die Umgebung vorgesehen. Hierzu dient der Unterdruck zumindest in dem Pressraum, so dass in dem Pressraum verarbeitetes Material nicht in die Umgebung austreten kann. Containment-Pressen werden nach der maximal zulässigen Exposition eines an der Tablettenpresse arbeitenden Bearbeiters mit dem in der Tablettenpresse verarbeiteten Material pro Zeiteinheit eingeteilt. Eine übliche Größenordnung im Bereich von High Containment-Pressen, wie sie erfindungsgemäß insbesondere betroffen sein können, liegt bei 0,1 bis 1 µg/m³ als Mittelwert über eine Produktionsschicht.

Die Erfindung erlaubt nun, auch solchen Containment- oder High Containment-Pressen ein Schmier- oder Trennmittel zuzuführen, ohne die Sicherheit eines Bearbeiters zu gefährden. Bei dem Schmier- oder Trennmittel kann es sich insbesondere um ein Stearat, z.B. MgSt handeln. Das Schmier- oder Trennmittel wird z.B. pneumatisch über die Zuführleitung von der Dosierstation in den Pressraum geleitet. Dazu kann das Schmier- oder Trennmittel einem gasförmigen Transportmedium, z.B. Luft, zugemischt werden. Dies kann in der Dosierstation erfolgen. Die Zuführleitung kann grundsätzlich durch eine Schlauchleitung gebildet sein. In dem Pressraum ist eine Appliziereinrichtung vorgesehen, die das Schmier-oder Trennmittel den Presswerkzeugen der Tablettenpresse, z.B. den Pressstempeln und den Matrizenbohrungen, in an sich bekannter Weise zuführt.

Bei der Erfindung erfolgt eine Druckmessung in der Zuführleitung und/oder dem Pressraum. Ein zwischen der Dosierstation und dem Pressraum an der Zuführleitung angeordnetes Absperrventil wird nur geöffnet und wird nur in der geöffneten Stellung gehalten, wenn und solange aufgrund der Druckmessung ein Freigabesignal vorliegt. Das Freigabesignal stellt also sicher, dass während des Zuführens des Schmier- oder Trennmittels in den Pressraum kein in der Tablettenpresse verpresstes Material unzulässig aus dem Pressraum der Tablettenpresse austreten kann, insbesondere in die Umgebung, in der sich Mitarbeiter aufhalten. Die Sicherheitsfunktion der Containment-Presse bleibt erfindungsgemäß trotz der kontinuierlich möglichen Zuführung des Schmier- oder Trennmittels jederzeit erhalten.

Bei dem erfindungsgemäßen System kann das Freigabesignal von der Druckmesseinrichtung ausgegeben werden und an die Steuereinrichtung geleitet werden. Es ist jedoch auch möglich, dass die Steuereinrichtung das Freigabesignal aufgrund von von der Druckmesseinrichtung erhaltener Messwerte ausgibt. Die Druckmesseinrichtung und die Steuereinrichtung können separate Einrichtungen sein oder zu einer gemeinsamen Druckmess- und Steuereinrichtung kombiniert sein.

Die Erfindung ermöglicht das Zuführen von Schmier- oder Trennmitteln zur Bestäubung von Presswerkzeugen auch in Containment-Anlagen in sicherer Weise und mit konstruktiv und verfahrenstechnisch vertretbarem Aufwand. Dadurch wird ein Tablettierverfahren nutzbar, das bislang aufgrund des hohen Anspruchs an den Bedienerschutz nicht möglich war. Durch die sicherheitsgerichtete Kombination der Drucksignale kann weiterhin die Verwendung vorhandener bzw. handelsüblicher Schmier- oder Trennmitteldosiersysteme in Containment-Pressen zur Anwendung kommen. Bislang bestand die einzige Möglichkeit zur Herstellung von Tabletten mit externer Schmierung der Presswerkzeuge in der Produktion mit Personenschutzanzügen und damit deutlich erschwerten Arbeitsbedingungen und Risiken für die Beschäftigten.

Erfindungsgemäß wird bei der Druckmessung der Druck stromauf des Absperrventils und der Pressraumdruck in dem Pressraum der Tablettenpresse gemessen, wobei das Freigabesignal nur vorliegt, wenn der Druck stromauf des Absperrventils um einen vorgegebenen ersten Grenzdruck größer ist als der Pressraumdruck.

Bei dem erfindungsgemäßen System ist entsprechend vorgesehen, dass die Druckmesseinrichtung mindestens einen ersten Drucksensor zum Messen des Drucks stromauf des Absperrventils und mindestens einen zweiten Drucksensor zum Messen des Pressraumdrucks in dem Pressraum der Tablettenpresse aufweist, wobei das Freigabesignal nur vorliegt, wenn der Druck stromauf des Absperrventils um einen vorgegebenen ersten Grenzdruck größer ist als der Pressraumdruck.

Die Druckmessung stromauf des Absperrventils erfolgt also in Fließrichtung des Schmier- oder Trennmittels vor dem Absperrventil. Zur Messung des Pressraumdrucks können Drucksensoren des erfindungsgemäßen Systems vorgesehen sein. Dann kann die Steuereinrichtung des erfindungsgemäßen Systems die Messwerte des Pressraumdrucksensors auswerten. Es ist jedoch auch möglich, dass hierfür ohnehin in dem Pressraum vorgesehene Drucksensoren der Tablettenpresse genutzt werden. Auch ist es dann möglich, dass von einer Maschinensteuerung der Tablettenpresse oder einem anderen Teilsystem der Gesamtanlage der gemessene Pressraumdruck ausgewertet wird und beispielsweise bei einer unzulässigen Überschreitung eines Grenzdrucks ein Sperrsignal an die Steuereinrichtung des erfindungsgemäßen Systems ausgegeben wird. Solange kein Sperrsignal bezüglich des Pressraumdrucks vorliegt, ist der stromauf des Absperrventils gemessene Druck dann um den vorgegebenen ersten Grenzdruck größer als der Pressraumdruck.

Nach einer weiteren Ausgestaltung kann vorgesehen sein, dass das Freigabesignal nur vorliegt, wenn der Pressraumdruck einen vorgegebenen zweiten Grenzdruck nicht überschreitet. Es wird bei dieser Ausgestaltung also auch überwacht, ob der Pressraumdruck einen absoluten (zweiten) Grenzdruck überschreitet. Diese Überwachung kann beispielsweise durch Überwachung eines Druckschalters erfolgen, der bei einem vorgegebenen Absolutwert schaltet. Diese Ausgestaltung liefert eine weitere Absicherung, denn wenn der stromauf des Absperrventils gemessene Druck zwar um den ersten Grenzdruck größer ist als der Pressraumdruck, der Pressraumdruck aber unzulässig hoch ist, kann ein unsicherer Zustand eintreten. So kann dann unter Umständen das über die Zuführleitung zugeführte Volumen nicht schnell genug aus dem Pressraum abgeführt werden. Dadurch kann sich der Druck in dem Pressraum weiter unzulässig erhöhen und es können Dichtungsbarrieren des Pressraums brechen, was im schlimmsten Fall zu einem Austritt toxischen Materials in die Umgebung führen könnte. Dies wird durch die vorgenannte Ausgestaltung sicher verhindert.

Als Druck stromauf des Absperrventils kann der Staudruck vor der Dosiereinrichtung oder der Druck in der Zuführleitung zwischen der Dosierstation und dem Absperrventil gemessen werden. Der Staudruck vor der Dosiereinrichtung ist der aufgrund des beispielsweise zur Zuführung über die Zuführleitung genutzten pneumatischen Systems am Eingang der Dosierstation bereitgestellte Druck. Dieser Staudruck oder der Druck vor dem Absperrventil, jedoch stromab der Dosierstation, können bei dieser Ausgestaltung gemessen und bei der Ausgabe des Freigabesignals berücksichtigt werden.

Nach einer weiteren Ausgestaltung kann vorgesehen sein, dass als Druck stromauf des Absperrventils der Staudruck vor der Dosiereinrichtung und der Druck in der Zuführleitung zwischen der Dosierstation und dem Absperrventil gemessen wird, wobei das Freigabesignal nur vorliegt, wenn der Staudruck vor der Dosiereinrichtung und der Druck in der Zuführleitung zwischen der Dosierstation und dem Absperrventil um den vorgegebenen ersten Grenzdruck größer sind als der Pressraumdruck.

Bei dem erfindungsgemäßen System kann entsprechend vorgesehen sein, dass die Druckmesseinrichtung mindestens zwei erste Drucksensoren aufweist, wobei die mindestens zwei ersten Drucksensoren als Druck stromauf des Absperrventils den Staudruck vor der Dosiereinrichtung und den Druck in der Zuführleitung zwischen der Dosierstation und dem Absperrventil messen, wobei das Freigabesignal nur vorliegt, wenn der Staudruck vor der Dosiereinrichtung und der Druck in der Zuführleitung zwischen der Dosierstation und dem Absperrventil um den vorgegebenen ersten Grenzdruck größer sind als der Pressraumdruck.

Bei dieser Ausgestaltung wird bei dem Vergleich mit dem Pressraumdruck sowohl der Druck in der Zuführleitung zwischen der Dosierstation und dem Absperrventil als auch der Staudruck vor der Dosiereinrichtung berücksichtigt. Nur wenn beide Drücke um den vorgegebenen ersten Grenzdruck größer sind als der Pressraumdruck, liegt das Freigabesignal vor. Die Berücksichtigung beider genannten Drücke bietet eine zusätzliche Sicherheit. Beispielsweise wenn es in der Dosiereinrichtung zu unzulässigen Abweichungen hinsichtlich des zudosierten Schmier- oder Trennmittels kommt, kann es zu unerwarteten Druckveränderungen stromab der Dosierstation, insbesondere zwischen der Dosierstation und dem Absperrventil kommen, die bei einer alleinigen Berücksichtigung des Staudrucks vor der Dosierstation nicht erkannt werden würden. Andererseits kann es bei unzulässigen Veränderungen in der Zuführleitung zwischen der Dosierstation und dem Absperrventil, beispielsweise einer Propfenbildung aus Schmier- oder Trennmittel, zu überhöhten Druckmessungen in der Zuführleitung zwischen der Dosierstation und dem Absperrventil kommen, die bei gleichzeitiger Berücksichtigung des Staudrucks vor der Dosierstation sicher erkannt werden können. Indem bei der vorgenannten Ausgestaltung für das Vorliegen des Freigabesignals beide gemessenen Drücke um den ersten Grenzdruck größer sein müssen als der Pressraumdruck, werden diese möglichen Fehlmessungen ausgeschlossen.

Das Freigabesignal kann ein aktiv vorliegendes Signal sein, das bei für das Freigabesignal nicht mehr vorliegenden Bedingungen unterbrochen wird. Es ist jedoch auch möglich, dass das Freigabesignal durch Nichtvorliegen eines Absperrsignals gebildet ist. Das Freigabesignal muss also nicht selbst in positiver Signalform vorliegen. Vielmehr kann das Nichtvorliegen eines Absperrsignals als Freigabesignal definiert werden. Es wird dann nur bei einem Fehlen oder einem Wegfall einer Bedingung für das Freigabesignal ein Sperrsignal ausgegeben, woraufhin das Absperrventil geschlossen wird. Solange kein Sperrsignal vorliegt, kann das Absperrventil dagegen geöffnet und offengehalten werden.

Soweit bei der Erfindung Absolutwerte von Drucksignalen verglichen werden, kann dies insbesondere über eine direkte Differenzdruckmessung erfolgen. Es ist insoweit jedoch auch möglich, dass die Druckniveaus der Drucksensoren jeweils als Differenzdruckmessung mit beispielsweise dem Umgebungsdruck erfolgen und relativ zueinander in Beziehung gesetzt werden.

Die Dosierstation kann in an sich bekannter Weise eine Dosiereinrichtung umfassen, die ein Schmier- oder Trennmittel einem gasförmigen Transportmedium, beispielsweise Luft, zumischt. Dieses gasförmige Transportmedium kann mittels einer pneumatischen Einrichtung, beispielsweise einer entsprechenden Pumpe, der Dosierstation zugeführt werden. Das Gemisch aus Schmier- oder Trennmittel und gasförmigem Transportmedium wird dann über die Zuführleitung dem Pressraum zugeführt. Zu diesem Zweck kann die Dosiereinrichtung beispielsweise eine Venturi-Düse umfassen, in der in an sich bekannter Weise anhand einer Querschnittsverengung ein Unterdruck erzeugt wird, der das dem Transportmedium zuzumischende Schmier- oder Trennmittel ansaugt. Solche Dosiereinrichtungen sind an sich bekannt.

Der Pressraum der Tablettenpresse kann gegenüber der Umgebung abgedichtet sein. Entsprechend kann die Zuführleitung gegenüber der Umgebung dicht an den Pressraum angeschlossen sein. Die Dichtheit liegt hier im Rahmen der Anforderungen an die jeweilige Containment- oder High Containment-Presse.

Die Tablettenpresse kann eine Rundläufer-Tablettenpresse sein. Rundläufer-Tablettenpressen besitzen bekanntermaßen einen drehend angetriebenen Rotor mit einer Matrizenscheibe mit einer Mehrzahl von auf einem Teilkreis angeordneten Matrizenbohrungen. Jeder Matrizenbohrung ist ein Paar aus einem Oberstempel und einem Unterstempel als Pressstempel zugeordnet. Die Pressstempel verpressen in die Matrizenbohrungen pulverförmig gefülltes pulverförmiges Material zu Tabletten. Dieser Aufbau von Rundläufer-Tablettenpressen ist dem Fachmann bekannt.

Das erfindungsgemäße Verfahren kann mit dem erfindungsgemäßen System ausgeführt werden. Entsprechend kann das erfindungsgemäße System zur Durchführung des erfindungsgemäßen Verfahrens geeignet sein.

Ein Ausführungsbeispiel der Erfindung wird nachfolgend anhand von Figuren näher erläutert. Es zeigen schematisch:
- Fig. 1: ein erfindungsgemäßes System in stark vereinfachter Form, und
- Fig. 2: eine schematische Darstellung zur Veranschaulichung der bei der Erfindung für das Freigabesignal eingesetzten Logik.

Soweit nichts anderes angegeben ist, bezeichnen in den Figuren gleiche Bezugszeichen gleiche Gegenstände.

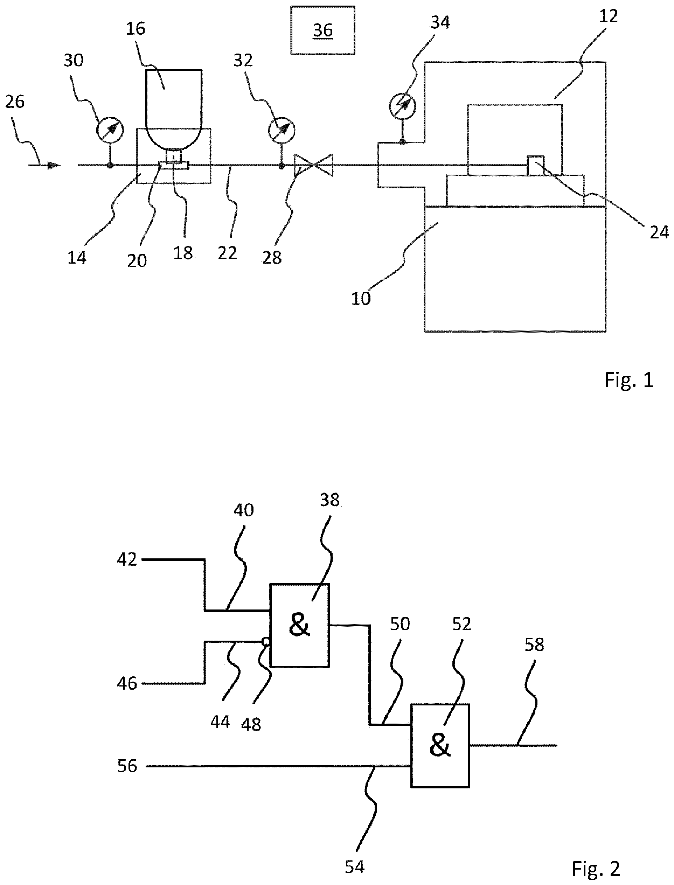

In Fig. 1 ist bei dem Bezugszeichen 10 schematisch eine Tablettenpresse, vorliegend eine Rundläufer-Tablettenpresse, dargestellt. Es handelt sich bei der Tablettenpresse 10 um eine Containment-Presse oder eine High Containment-Presse. Die Tablettenpresse 10 besitzt einen Pressraum 12, in dem unter anderem der Rotor der Rundläufer-Tablettenpresse 10 mit seinen Presswerkzeugen, wie Pressstempeln und Matrizenbohrungen, angeordnet ist. Zumindest der Pressraum 12 steht gegenüber der Umgebung unter einem Unterdruck. Dazu ist zumindest der Pressraum 12 gegenüber der Umgebung abgedichtet und es ist eine nicht näher dargestellte Absaugeinrichtung zumindest mit dem Pressraum 12 verbunden, die zur Aufrechterhaltung des Unterdrucks Luft aus dem Pressraum 12 absaugt.

Bei dem Bezugszeichen 14 ist eine Dosierstation zum Zuführen eines Schmier- oder Trennmittels zu den Presswerkzeugen der Tablettenpresse 10 dargestellt. Die Dosierstation 14 umfasst ein Schmier- oder Trennmittelreservoir 16, das über einen Zulauf 18 mit einer Venturi-Düse 20 als Dosiereinrichtung 20 der Dosierstation 14 verbunden ist. Die Venturi-Düse 20 ist in einer Zuführleitung 22 angeordnet, die in die Tablettenpresse 10 und den Pressraum 12 eintritt und zu einer Appliziereinrichtung 24 führt. Die Zuführleitung 22 ist im Rahmen der Anforderungen der Containment- bzw. High Containment-Umgebung der Tablettenpresse 10 dicht an den Pressraum 12 der Tablettenpresse 10 angeschlossen. Über eine nicht näher dargestellte pneumatische Einrichtung, beispielsweise eine Pumpe, wird ein gasförmiges Medium, beispielsweise Luft, stromauf der Dosierstation 14 unter Druck in die Zuführleitung 22 zugeführt, wie in Fig. 1 durch den Pfeil 26 veranschaulicht. In der Zuführleitung 22 herrscht somit ein Überdruck gegenüber der Umgebung. Das zugeführte gasförmige Medium durchfließt die Venturi-Düse 20, wobei es im Bereich einer Querschnittsverengung der Venturi-Düse 20 zu einem Unterdruck und damit zu einem Ansaugen von Schmier- oder Trennmittel über den Zulauf 18 aus dem Schmier- oder Trennmittelreservoir 16 kommt. Sofern ein an der Zuführleitung 22 angeordnetes Absperrventil 28 geöffnet ist, gelangt das Gemisch aus gasförmigem Medium und Schmier- oder Trennmittel von der Dosierstation 14 zu der Appliziereinrichtung 24, die die Presswerkzeuge der Tablettenpresse 10 mit dem in dem gasförmigen Medium enthaltenen Schmier- oder Trennmittel bestäubt.

Ein stromauf der Dosierstation 14 vorgesehener Drucksensor 30 misst den Staudruck vor der Dosierstation 14. Ein zwischen der Dosierstation 14 und dem Absperrventil 28 an der Zuführleitung 22 angeordneter Drucksensor 32 misst den Druck in der Zuführleitung 22 zwischen der Dosierstation 14 und dem Absperrventil 28. Außerdem misst ein Drucksensor 34 den Pressraumdruck in dem Pressraum 12 der Tablettenpresse 10. Die Drucksensoren 30, 32 und 34 sind Teil einer Druckmesseinrichtung des erfindungsgemäßen Systems. Die Drucksensoren 30 und 32 bilden dabei erste Drucksensoren und der Drucksensor 34 bildet einen zweiten Drucksensor. Die Messwerte der Drucksensoren 30, 32 und 34 liegen in dem gezeigten Beispiel über nicht näher dargestellten Leitungen an einer Steuereinrichtung 36 an. Auf Grundlage der Messwerte der Druckmesseinrichtungen 30, 32 und 34 erzeugt die Steuereinrichtung 36 bei Vorliegen festgelegter Druckbedingungen ein Freigabesignal zum Öffnen des Absperrventils 28. Liegt das Freigabesignal vor, öffnet die Steuereinrichtung 36 das Absperrventil 28, so dass Schmier- oder Trennmittel in der erläuterten Weise den Presswerkzeugen der Tablettenpresse 10 zugeführt werden kann. Die Steuereinrichtung 36 hält das Absperrventil 28 dabei während des Produktionsbetriebs der Tablettenpresse 10 offen, solange das Freigabesignal vorliegt. Liegt das Freigabesignal nicht mehr vor, weil eine der festgelegten Druckbedingungen nicht mehr vorliegt, schließt die Steuereinrichtung 36 das Absperrventil 28.

Die Druckbedingungen und das Erzeugen des Freigabesignals sollen anhand der in der schematischen Fig. 2 gezeigten Logik erläutert werden. Ein erster UND-Operator ist in Fig. 2 bei dem Bezugszeichen 38 gezeigt. An einem ersten Eingang 40 des ersten UND-Operators 38 liegt als Eingangsgröße 42 ein Vergleichssignal aus einem Vergleich zwischen dem von dem Drucksensor 32 gemessenen Druckwert und dem von dem Drucksensor 34 gemessenen Pressraumdruck an. Sofern der von dem Drucksensor 32 gemessene Druck um einen vorgegebenen ersten Grenzdruck größer ist als der von dem Drucksensor 34 gemessene Pressraumdruck, ist das Vergleichssignal 42 vorhanden (Digitalzustand 1). Ist die vorgenannte Bedingung nicht erfüllt, ist das Vergleichssignal 42 nicht vorhanden (Digitalzustand 0).

An dem zweiten Eingang 44 des ersten UND-Operators 38 liegt ein zweites Vergleichssignal 46 an, wobei dieses invertiert anliegt, wie bei dem Bezugszeichen 48 dargestellt. Dieses Vergleichssignals 46 ergibt sich aus dem Vergleich des von dem Drucksensor 34 gemessenen Pressraumdruck mit einem zweiten Grenzdruck. Sofern der Pressraumdruck den vorgegebenen zweiten Grenzdruck überschreitet, ist das Vergleichssignal 46 vorhanden (Digitalzustand 1). Sofern der Pressraumdruck den vorgegebenen zweiten Grenzdruck nicht überschreitet, ist das Vergleichssignal 46 nicht vorhanden (Digitalzustand 0).

Da das Vergleichssignal 46 wie erläutert invertiert (48) an dem ersten UND-Operator 38 anliegt, erzeugt der erste UND-Operator 38 ein vorhandenes Ausgangssignal (Digitalzustand 1), sofern der von dem Drucksensor 32 gemessene Druck in der Zuführleitung 22 um den vorgegebenen ersten Grenzdruck größer ist als der Pressraumdruck, und sofern der Pressraumdruck den vorgegebene zweiten Grenzdruck nicht überschreitet.

Das Ausgangssignal des ersten UND-Operators 38 liegt am ersten Eingang 50 eines zweiten UND-Operators 52 an. An dem zweiten Eingang 54 des zweiten UND-Operators 52 liegt ein Vergleichssignal 56 an. Dieses Vergleichssignal ergibt sich aus dem Vergleich des von dem Drucksensor 30 gemessenen Staudrucks vor der Dosierstation 14 und dem von dem Drucksensor 34 gemessenen Pressraumdruck in dem Pressraum 12. Das Vergleichssignal 56 ist vorhanden (Digitalsignal 1), sofern der gemessene Staudruck vor der Dosiereinrichtung 14 um den vorgegebenen ersten Grenzdruck größer ist als der Pressraumdruck. Anderenfalls ist das Vergleichssignal 56 nicht vorhanden (Digitalzustand 0).

Der zweite UND-Operator 52 erzeugt somit ein vorhandenes Ausgabesignal 58 (Digitalzustand 1), sofern der erste UND-Operator 38 ein vorhandenes Ausgangssignal (Digitalzustand 1) ausgibt und sofern der Staudruck vor der Dosierstation 14 um den ersten Grenzdruck größer ist als der Pressraumdruck.

Sofern das Ausgangssignal 58 des zweiten UND-Operators 52 vorhanden ist (Digitalzustand 1), liegt das Freigabesignal zum Öffnen bzw. Offenhalten des Absperrventils 28 vor. Liegt dagegen das Ausgabesignal 58 des zweiten UND-Operators 52 nicht vor (Digitalzustand 0), liegt das Freigabesignal nicht vor und die Steuereinrichtung 36 schließt das Absperrventil 28 bzw. hält dieses geschlossen.

Die in Fig. 2 dargestellte Logik kann insbesondere in die Steuereinrichtung 36 integriert sein.

Durch die erfindungsgemäße sicherheitsgerichtete Drucküberwachung kann auch bei Containment-Pressen eine Bestäubung der Presswerkzeuge mittels eines Schmieroder Trennmittels in konstruktiv und verfahrenstechnisch vertretbarer und jederzeit sicherer Weise erfolgen. Insbesondere kann durch die erfindungsgemäße Sicherheitsschaltung eine übliche Dosierstation an die erfindungsgemäßen Sicherheitselemente (Absperrventil, Drucksensoren, Auswertung in der Steuereinrichtung) angeschlossen werden, ohne dass anderweitig in die Steuerungslogik der Dosierstation eingegriffen werden muss.

### Bezugszeichenliste

- 10: Tablettenpresse
- 12: Pressraum
- 14: Dosierstation
- 16: Schmier- oder Trennmittelreservoir
- 18: Zulauf
- 20: Venturi-Düse
- 22: Zuführleitung
- 24: Appliziereinrichtung
- 26: Pfeil
- 28: Absperrventil
- 30: erster Drucksensor
- 32: erster Drucksensor
- 34: zweiter Drucksensor
- 36: Steuereinrichtung
- 38: erster UND-Operator
- 40: erster Eingang
- 42: erstes Vergleichssignal
- 44: zweiter Eingang
- 46: zweites Vergleichssignal
- 48: invertiertes Vergleichssignal
- 50: Ausgangssignal
- 52: zweiter UND-Operator
- 54: zweiter Eingang
- 56: Vergleichssignal
- 58: Ausgabesignal

## Patentansprüche

1. Verfahren zum Zuführen eines Schmier- oder Trennmittels aus einer Dosierstation (14) zu in einem Pressraum (12) einer Tablettenpresse (10) angeordneten Presswerkzeugen über eine die Dosierstation (14) mit dem Pressraum (12) verbindende Zuführleitung (22), wobei zumindest der Pressraum (12) der Tablettenpresse (10) gegenüber der Umgebung unter einem Unterdruck steht, wobei eine Druckmessung in der Zuführleitung (22) und/oder dem Pressraum (12) erfolgt, wobei ein zwischen der Dosierstation (14) und dem Pressraum (12) an der Zuführleitung (22) angeordnetes Absperrventil (28) nur geöffnet wird und nur in der geöffneten Stellung gehalten wird, wenn aufgrund der Druckmessung ein Freigabesignal vorliegt, **dadurch gekennzeichnet, dass** bei der Druckmessung der Druck stromauf des Absperrventils (28) und der Pressraumdruck in dem Pressraum (12) der Tablettenpresse (10) gemessen wird, und dass das Freigabesignal nur vorliegt, wenn der Druck stromauf des Absperrventils (28) um einen vorgegebenen ersten Grenzdruck größer ist als der Pressraumdruck.

2. Verfahren nach Anspruch 1, **dadurch gekennzeichnet, dass** das Freigabesignal weiterhin nur vorliegt, wenn der Pressraumdruck einen vorgegebenen zweiten Grenzdruck nicht überschreitet.

3. Verfahren nach einem der Ansprüche 1 oder 2, **dadurch gekennzeichnet, dass** als Druck stromauf des Absperrventils (28) der Staudruck vor der Dosiereinrichtung (14) oder der Druck in der Zuführleitung (22) zwischen der Dosierstation (14) und dem Absperrventil (28) gemessen wird.

4. Verfahren nach einem der Ansprüche 1 oder 2, **dadurch gekennzeichnet, dass** als Druck stromauf des Absperrventils (28) der Staudruck vor der Dosiereinrichtung (14) und der Druck in der Zuführleitung (22) zwischen der Dosierstation (14) und dem Absperrventil (28) gemessen wird, wobei das Freigabesignal nur vorliegt, wenn der Staudruck vor der Dosiereinrichtung (14) und der Druck in der Zuführleitung (22) zwischen der Dosierstation (14) und dem Absperrventil (28) um den vorgegebenen ersten Grenzdruck größer sind als der Pressraumdruck.

5. Verfahren nach einem der vorhergehenden Ansprüche, **dadurch gekennzeichnet, dass** das Freigabesignal durch Nichtvorliegen eines Absperrsignals gebildet ist.

6. Verfahren nach einem der vorhergehenden Ansprüche, **dadurch gekennzeichnet, dass** es mit einem System gemäß einem der nachfolgenden Ansprüche ausgeführt wird, wobei das System weiterhin die Tablettenpresse (10) mit der Dosierstation (14) umfasst.

7. System zum Zuführen eines Schmier- oder Trennmittels aus einer Dosierstation (14) zu in einem Pressraum (12) einer Tablettenpresse (10) angeordneten Presswerkzeugen , wobei das System den Pressraum (12) und eine die Dosierstation (14) mit dem Pressraum (12) verbindende Zuführleitung umfasst, wobei das System über die Zuführleitung (22) das Schmier- oder Trennmittel zuführt, wobei zumindest der Pressraum (12) der Tablettenpresse (10) gegenüber der Umgebung unter einem Unterdruck steht, wobei eine Druckmesseinrichtung vorgesehen ist zur Druckmessung in der Zuführleitung (22) und/oder in dem Pressraum (12), wobei ein zwischen der Dosierstation (14) und dem Pressraum (12) an der Zuführleitung (22) angeordnetes Absperrventil (28) vorgesehen ist, wobei eine Steuereinrichtung (36) vorgesehen ist, die dazu ausgebildet ist, das Absperrventil (28) nur zu öffnen und nur in der geöffneten Stellung zu halten, wenn aufgrund der Druckmessung ein Freigabesignal vorliegt, **dadurch gekennzeichnet, dass** die Druckmesseinrichtung mindestens einen ersten Drucksensor (30, 32) zum Messen des Drucks stromauf des Absperrventils (28) und mindestens einen zweiten Drucksensor (34) zum Messen des Pressraumdrucks in dem Pressraum (12) der Tablettenpresse (10) aufweist, wobei das Freigabesignal nur vorliegt, wenn der Druck stromauf des Absperrventils (28) um einen vorgegebenen ersten Grenzdruck größer ist als der Pressraumdruck.

8. System nach Anspruch 7, **dadurch gekennzeichnet, dass** das Freigabesignal weiterhin nur vorliegt, wenn der Pressraumdruck einen vorgegebenen zweiten Grenzdruck nicht überschreitet.

9. System nach einem der Ansprüche 7 oder 8, **dadurch gekennzeichnet, dass** der mindestens eine erste Drucksensor (30, 32) als Druck stromauf des Absperrventils (28) den Staudruck vor der Dosiereinrichtung (14) oder den Druck in der Zuführleitung (22) zwischen der Dosierstation (14) und dem Absperrventil (28) misst.

10. System nach einem der Ansprüche 7 oder 8, **dadurch gekennzeichnet, dass** die Druckmesseinrichtung mindestens zwei erste Drucksensoren (30, 32) aufweist, wobei die mindestens zwei ersten Drucksensoren (30, 32) als Druck stromauf des Absperrventils (28) den Staudruck vor der Dosiereinrichtung (14) und den Druck in der Zuführleitung (22) zwischen der Dosierstation (14) und dem Absperrventil (28) messen, wobei das Freigabesignal nur vorliegt, wenn der Staudruck vor der Dosiereinrichtung (14) und der Druck in der Zuführleitung (22) zwischen der Dosierstation (14) und dem Absperrventil (28) um den vorgegebenen ersten Grenzdruck größer sind als der Pressraumdruck.

11. System nach einem der Ansprüche 7 bis 10, **dadurch gekennzeichnet, dass** das Freigabesignal durch Nichtvorliegen eines Absperrsignals gebildet ist.

12. System nach einem der Ansprüche 7 bis 11, **dadurch gekennzeichnet, dass** die Dosierstation (14) eine Dosiereinrichtung (20) umfasst, die ein Schmier- oder Trennmittel einem gasförmigen Transportmedium zumischt.

13. System nach einem der Ansprüche 7 bis 12, **dadurch gekennzeichnet, dass** der Pressraum (12) gegenüber der Umgebung abgedichtet ist, und dass die Zuführleitung (22) gegenüber der Umgebung dicht an den Pressraum (12) angeschlossen ist.

14. System nach einem der Ansprüche 7 bis 13, **dadurch gekennzeichnet, dass** die Tablettenpresse (10) eine Rundläufertablettenpresse (12) ist.

## Claims

1. A method for supplying a lubricant or release agent from a dosing station (14) to molding tools arranged in a pressing chamber (12) of a tablet press (10) via a feed pipe (22) connecting the dosing station (14) with the pressing chamber (12), wherein at least the pressing chamber (12) of the tablet press (10) is exposed to a negative pressure with respect to the surroundings, wherein a pressure measurement is performed in the feed pipe (22) and/or the pressing chamber (12), wherein a shut-off valve (28) arranged on the feed pipe (22) between the dosing station (14) and the pressing chamber (12) is only opened, and is only maintained in the open position, if there is an enable signal due to the pressure measurement, **characterized in that**, during the pressure measurement, the pressure upstream of the shut-off valve (28) and the pressing chamber pressure in the pressing chamber (12) of the tablet press (10) are measured, and there is only an enable signal if the pressure upstream of the shut-off valve (28) is greater than the pressing chamber pressure by a given first limit pressure.

2. The method according to Claim 1, **characterized in that** there is, furthermore, only an enable signal if the pressing chamber pressure does not exceed a given second limit pressure.

3. The method according to any one of Claims 1 or 2, **characterized in that** the dynamic pressure before the dosing apparatus (14) or the pressure in the feed pipe (22) between the dosing station (14) and the shut-off valve (28) is measured as the pressure upstream of the shut-off valve (28).

4. The method according to any one of Claims 1 or 2, **characterized in that** the dynamic pressure before the dosing apparatus (14) and the pressure in the feed pipe (22) between the dosing station (14) and the shut-off valve (28) are measured as the pressure upstream of the shut-off valve (28), wherein there is only an enable signal if the dynamic pressure before the dosing apparatus (14) and the pressure in the feed pipe (22) between the dosing station (14) and the shut-off valve (28) are greater than the pressing chamber pressure by the given first limit pressure.

5. The method according to any one of the preceding claims, **characterized in that** the enable signal is formed by the absence of a shut-off signal.

6. The method according to any one of the preceding claims, **characterized in that** it is executed with a system according to any one of the following claims, wherein the system furthermore comprises the tablet press (10) with the dosing station (14).

7. A system for supplying a lubricant or release agent from a dosing station (14) to molding tools arranged in a pressing chamber (12) of a tablet press (10), wherein the system comprises the pressing chamber (12) and a feed pipe connecting the dosing station (14) with the pressing chamber (12), wherein the system feeds the lubricant or release medium via the feed pipe (22), wherein at least the pressing chamber (12) of the tablet press (10) is exposed to a negative pressure with respect to the surroundings, wherein a pressure measurement apparatus is provided for measuring the pressure in the feed pipe (22) and/or in the pressing chamber (12), wherein a shut-off valve (28) arranged on the feed pipe (22) between the dosing station (14) and the pressing chamber (12) is provided, wherein a control apparatus (36) is provided, which is configured to only open the shut-off valve (28) and to only maintain it in the open position, if there is an enable signal due to the pressure measurement, **characterized in that** the pressure measurement apparatus has at least one first pressure sensor (30, 32) for measuring the pressure upstream of the shut-off valve (28), and at least one second pressure sensor (34) for measuring the pressing chamber pressure in the pressing chamber (12) of the tablet press (10), wherein there is only an enable signal if the pressure upstream of the shut-off valve (28) is greater than the pressing chamber pressure by a given first limit pressure.

8. The system according to Claim 7, **characterized in that** there is, furthermore, only an enable signal if the pressing chamber pressure does not exceed a given second limit pressure.

9. The system according to any one of Claims 7 or 8, **characterized in that** the at least one first pressure sensor (30, 32) measures the dynamic pressure before the dosing apparatus (14) or the pressure in the feed pipe (22) between the dosing station (14) and the shut-off valve (28) as the pressure upstream of the shut-off valve (28).

10. The system according to any one of Claims 7 or 8, **characterized in that** the pressure measurement apparatus has at least two first pressure sensors (30, 32), wherein the at least two first pressure sensors (30, 32) measure the dynamic pressure before the dosing apparatus (14) and the pressure in the feed pipe (22) between the dosing station (14) and the shut-off valve (28) as the pressure upstream of the shut-off valve (28), wherein there is only an enable signal if the dynamic pressure before the dosing apparatus (14) and the pressure in the feed pipe (22) between the dosing station (14) and the shut-off valve (28) are greater than the pressing chamber pressure by the given first limit pressure.

11. The system according to any one of Claims 7 or 10, **characterized in that** the enable signal is formed by the absence of a shut-off signal.

12. The system according to any one of Claims 7 or 11, **characterized in that** the dosing station (14) comprises a dosing apparatus (20) which mixes a lubricant or release agent with a gaseous transport medium.

13. The system according to any one of Claims 7 or 12, **characterized in that** the pressing chamber (12) is sealed up with respect to its surroundings, and the feed pipe (22) is tightly connected to the pressing chamber (12) with respect to the surroundings.

14. The system according to any one of Claims 7 or 13, **characterized in that** the tablet press (10) is a rotary tablet press (12).

## Revendications

1. Procédé d'alimentation en agent de graissage ou en agent de démoulage à partir d'une station de dosage (14) vers des outils de pressage disposés dans une chambre de pressage (12) d'une presse à comprimés (10) par le biais d'une conduite d'alimentation (22) reliant la station de dosage (14) à la chambre de pressage (12), dans lequel au moins la chambre de pressage (12) de la presse à comprimés (10) est sous une pression négative par rapport à l'environnement, dans lequel une mesure de pression est effectuée dans la conduite d'alimentation (22) et/ou dans la chambre de pressage (12), dans lequel une soupape d'arrêt (28) disposée sur la conduite d'alimentation (22) entre la station de dosage (14) et la chambre de pressage (12) est ouverte et maintenue dans la position ouverte uniquement en présence d'un signal d'activation basé sur la mesure de pression, **caractérisé en ce que**
lors de la mesure de pression, la pression en amont de la soupape d'arrêt (28) et la pression de chambre de pressage dans la chambre de pressage (12) de la presse à comprimés (10) sont mesurées, et **en ce que**
le signal d'activation est émis uniquement
lorsque la pression en amont de la soupape d'arrêt (28) est supérieure à la pression de chambre de pressage selon une première pression limite prédéfinie.

2. Procédé selon la revendication 1, **caractérisé en ce que** le signal d'activation est en outre émis uniquement lorsque la pression de chambre de pressage ne dépasse pas une deuxième pression limite prédéfinie.

3. Procédé selon l'une des revendications 1 ou 2, **caractérisé en ce que** la pression dynamique précédant le dispositif de dosage (14) ou la pression dans la conduite d'alimentation (22) entre la station de dosage (14) et la soupape d'arrêt (28) est mesurée en tant que pression en amont de la soupape d'arrêt (28).

4. Procédé selon l'une des revendications 1 ou 2, **caractérisé en ce que** la pression dynamique précédant le dispositif de dosage (14) et la pression dans la conduite d'alimentation (22) entre la station de dosage (14) et la soupape d'arrêt (28) est mesurée en tant que pression en amont de la soupape d'arrêt (28), dans lequel le signal d'activation est émis uniquement lorsque la pression dynamique précédant le dispositif de dosage (14) et la pression dans la conduite d'alimentation (22) entre la station de dosage (14) et la soupape d'arrêt (28) sont supérieures à la pression de chambre de pressage selon la première pression limite prédéfinie.

5. Procédé selon l'une des revendications précédentes, **caractérisé en ce que** le signal d'activation est formé par l'absence d'un signal d'arrêt.

6. Procédé selon l'une des revendications précédentes, **caractérisé en ce qu'**il est mis en œuvre à l'aide d'un système selon l'une des revendications suivantes, dans lequel le système comporte en outre la presse à comprimés (10) avec la station de dosage (14).

7. Système d'alimentation d'un agent de graissage ou d'un agent de démoulage à partir d'une station de dosage (14) vers des outils de pressage disposés dans une chambre de pressage (12) d'une presse à comprimés (10), dans lequel le système comporte la chambre de pressage (12) et une conduite d'alimentation (22) reliant la station de dosage (14) à la chambre de pressage (12), dans lequel le système alimente l'agent de graissage ou de démoulage par le biais de la conduite d'alimentation (22), dans lequel au moins la chambre de pressage (12) de la presse à comprimés (10) est sous une pression négative par rapport à l'environnement, dans lequel il est prévu un dispositif de mesure de pression pour la mesure de pression dans la conduite d'alimentation (22) et/ou dans la chambre de pressage (12), dans lequel il est prévu une soupape d'arrêt (28) disposée sur la conduite d'alimentation (22) entre la station de dosage (14) et la chambre de pressage (12), dans lequel il est prévu un dispositif de commande (36) conçu pour ouvrir la soupape d'arrêt (28) et maintenir celle-ci dans la position ouverte uniquement en présence d'un signal d'activation basé sur la mesure de pression, **caractérisé en ce que**
le dispositif de mesure de pression présente au moins un premier capteur de pression (30, 32) destiné à mesurer la pression en amont de la soupape d'arrêt (28) et au moins un deuxième capteur de pression (34) destiné à mesurer la pression de chambre de pressage dans la chambre de pressage (12) de la presse à comprimés (10), dans lequel le signal d'activation est émis uniquement lorsque la pression en amont de la soupape d'arrêt (28) est supérieure à la pression de chambre de pressage selon une première pression limite prédéfinie.

8. Système selon la revendication 7, **caractérisé en ce que** le signal d'activation est en outre émis uniquement lorsque la pression de chambre de pressage ne dépasse pas une deuxième pression limite prédéfinie.

9. Système selon l'une des revendications 7 ou 8, **caractérisé en ce que** l'au moins un premier capteur de pression (30, 32) mesure la pression dynamique précédant le dispositif de dosage (14) ou la pression dans la conduite d'alimentation (22) entre la station de dosage (14) et la soupape d'arrêt (28) en tant que pression en amont de la soupape d'arrêt (28).

10. Système selon l'une des revendications 7 ou 8, **caractérisé en ce que** le dispositif de mesure de pression présente au moins deux premiers capteurs de pression (30, 32), dans lequel les au moins deux premiers capteurs de pression (30, 32) mesurent la pression dynamique précédant le dispositif de dosage (14) et la pression dans la conduite d'alimentation (22) entre la station de dosage (14) et la soupape d'arrêt (28) en tant que pression en amont de la soupape d'arrêt (28), dans lequel le signal d'activation est émis uniquement lorsque la pression dynamique précédant le dispositif de dosage (14) et la pression dans la conduite d'alimentation (22) entre la station de dosage (14) et la soupape d'arrêt (28) sont supérieures à la pression de chambre de pressage selon la première pression limite prédéfinie.

11. Système selon l'une des revendications 7 à 10, **caractérisé en ce que** le signal d'activation est formé par l'absence d'un signal d'arrêt.

12. Système selon l'une des revendications 7 à 11, **caractérisé en ce que** la station de dosage (14) comporte un dispositif de dosage (20), lequel mélange un agent de graissage ou de démoulage avec un fluide de transport gazeux.

13. Système selon l'une des revendications 7 à 12, **caractérisé en ce que** la chambre de pressage (12) est étanche par rapport à l'environnement, et **en ce que** la conduite d'alimentation (22) est raccordée à la chambre de pressage (12) de façon étanche par rapport à l'environnement.

14. Système selon l'une des revendications 7 à 13, **caractérisé en ce que** la presse à comprimés (10) est une presse à comprimés rotative (12).
